# EUROPÄISCHE PATENTANMELDUNG

(11) **EP 2 218 938 A1**
(43) Veröffentlichungstag der Anmeldung: **18.08.2010**
(21) Anmeldenummer: 10004168.0
(22) Anmeldetag: 30.12.2005
(51) Int. Cl.: F16F 15/139

(54) **Dämpfungseinrichtung, insbesondere für ein Zweimassenschwungrad**

(30) Priorität: 26.01.2005 DE 102005003798; 17.03.2005 DE 102005012861
(62) Teilanmeldung aus: 05849507.8
(71) Anmelder: Rohs, Ulrich, Dr., 52351 Düren (DE)
(72) Erfinder: Rohs, Ulrich, Dr., 52351 Düren (DE)
(74) Vertreter: Reuther, Martin

(57) **Zusammenfassung**

Eine Dämpfungseinrichtung, insbesondere für ein Zweimassenschwungrad mit einem ersten Bauteil und einem zweiten Bauteil und einer dazwischen angeordneten Reibeinrichtung zeichnet sich dadurch aus, dass das erste Bauteil und/oder das zweite Bauteil einen Flansch aufweist, der mit einem Federsystem in Wirkverbindung steht, und dass neben einem mit dem Federsystem in Wirkverbindung stehenden Flansch ein Flieger angeordnet ist, der ebenfalls mit dem Federsystem in Wirkverbindung steht.

## Beschreibung

Die Erfindung betrifft eine Dämpfungseinrichtung, insbesondere für ein Zweimassenschwungrad, mit einem ersten Bauteil und einem zweiten Bauteil und einer dazwischen angeordneten Reibeinrichtung.

Für Schwingungsdämpfer und insbesondere für Zweimassenschwungräder wurden verschiedenartigste Dämpfungseinrichtungen vorgeschlagen. Während das Federsystem eines Zweimassenschwungrades meist mit sehr geringen Dämpfungswerten arbeitet, dient in der Regel ein separates Dämpfungssystem dazu, entsprechend genauen dynamischen Vorgaben spezielle Dämpfungswerte zu erreichen. Hierbei sind geschmierte Dämpfungseinrichtungen bekannt, die Fett aufweisen, das im Bereich der Reibflächen wirkt. Andere Dämpfungseinrichtungen arbeiten trocken, um bei bestimmten Belastungszuständen dem System durch Reibung Energie zu entziehen.

Der Erfindung liegt die Aufgabe zugrunde, ein neues Dämpfungssystem vorzuschlagen, dass leicht in bekannte Zweimassenschwungräder integrierbar ist und die geforderten Dämpfungscharakteristiken in optimaler Weise erfüllt.

Diese Aufgabe wird mit einer gattungsgemäßen Dämpfungseinrichtung gelöst, bei der das erste Bauteil und/oder das zweite Bauteil einen Flansch aufweist, der mit einem Federsystem in Verbindung steht, und dass neben einem mit dem Federsystem in Wirkverbindung stehenden Flansch ein Flieger angeordnet ist, der ebenfalls mit dem Federsystem in Wirkverbindung steht.

Das zweite Bauteil kann zwei beabstandete Flächen aufweisen und das erste Bauteil zwischen diesen Flächen angeordnet sein und ein drittes Bauteil ebenfalls zwischen diesen Flächen angeordnet sein, wobei das dritte Bauteil und das erste Bauteil bei einer Relativbewegung zueinander sich derart verspannen, dass Flächen des ersten und des dritten Bauteils gegen Flächen des zweiten Bauteils gepresst werden.

Die erfindungsgemäße Dämpfungseinrichtung sieht somit verschiedene Bauteile vor, die bei einer Relativbewegung zueinander sich verspannen, sodass Bauteile gegeneinander gepresst werden und Reibung erzeugen. Die Dämpfungseinrichtung ist aus wenigen Bauteilen zusammen zustellen und sie kann dadurch an verschiedenen Bereichen in ein bekanntes Zweimassenschwungrad integriert werden.

Eine Ausführungsvariante sieht vor, dass das erste Bauteil mit einem Antrieb verbindbar ist und das zweite Bauteil mit einem Abtrieb. Alternativ hierzu kann jedoch auch das erste Bauteil mit einem Abtrieb verbindbar sein und das zweite Bauteil mit einem Antrieb.

Besonders vorteilhaft ist es, wenn zwischen den beabstandeten Flächen ein ringförmiger Raum gebildet ist. Dies wird vorzugsweise durch eine ringförmige Ausbildung der den Raum begrenzenden Bauteile erzielt. Zumindest ein Teil des dritten Bauteils befindet sich dann innerhalb des ringförmigen Raumes und die Reibflächen sind vorzugsweise innerhalb dieses ringförmigen Raumes angeordnet.

Der ringförmige Raum kann durch das erste und zweite Bauteil nur angedeutet sein. Er kann jedoch auch radial nach außen im Wesentlichen geschlossen sein. Dadurch bildet er eine Kammer, die es beispielsweise auch ermöglicht, einzelne der bisher beschriebene Bauteile an der radial außen liegenden Fläche dieses Raumes schleifen zu lassen.

Der ringförmige Raum bildet jedoch den großen Vorteil, dass er dazu geeignet ist Schmiermittel aufzunehmen. Er kann somit in der Reibeinrichtung angeordnetes Fett oder ein flüssiges Schmiermittel halten und dadurch für eine optimale Benetzung der zu schmierenden Reibflächen sorgen.

Insbesondere wenn Schmiermittel von radial innen in den ringförmigen Raum eindringen kann, ist es vorteilhaft, wenn dieses Schmiermittel diesen Raum auch wieder verlassen kann. Hierzu wird vorgeschlagen, dass der ringförmige Raum Öffnungen für den Zufluss und den Abfluss von Schmiermittel aufweist. In einem Ausführungsbeispiel, ist die radial innen liegend Fläche des ringförmigen Raumes bis auf das in den Raum hineinragende Bauteil vollständig geöffnet, während die radial außen liegende Fläche des ringförmigen Raumes Bohrungen aufweist, durch die das Schmiermittel radial nach außen gelangen kann.

Eine vorteilhafte Ausführungsvariante sieht vor, dass das erste und das dritte Bauteil zwischen den Flächen des zweiten Bauteils beweglich relativ zueinander und beweglich zu einem zweiten Bauteil angeordnet sind. Die Flächen des zweiten Bauteils bilden somit eine Begrenzung, zwischen denen das erste und das dritte Bauteil angeordnet sind. Diese Flächen des zweiten Bauteils sind beispielsweise parallele ebene Flächen, die zwischen sich einen etwa rechteckigen Raum für die Aufnahme des ersten und des dritten Bauteils bilden. Der rechteckige Querschnitt dieses Raumes muss jedoch nicht über die gesamte Umfangsfläche die gleichen Abmessungen aufweisen, sondern die Querschnittsfläche kann variieren, um auch über die Raumbegrenzungsflächen auf die Reibbedingungen an der Dämpfungseinrichtung einzuwirken.

Um bei der Verspannung der Bauteile relativ zueinander von zwei Seiten auf das erste Bauteil einzuwirken, wird vorgeschlagen, dass das dritte Bauteil zwei auf jeweils einer Seite des ersten Bauteils angeordnete Baugruppen aufweist. Dadurch werden die beim Verspannen der Bauteile entstehenden Querkräfte reduziert oder zumindest auf einen kleineren Wert begrenzt. Außerdem erlaubt der Aufbau das Anordnen unterschiedlicher Keilflächen und Rampenwinkel auf verschiedenen Seiten des ersten Bauteils und dadurch eine Vielzahl an Möglichkeiten zur Beeinflussung der Reibwerte.

Alle aufeinander wirkenden Flächen vom ersten, zweiten und dritten Bauteil können mit Reibflächen ausgestattet sein. Vorteilhaft ist es, wenn die gegenüberliegenden als Rampen ausgebildeten Bauteile ohne Reibflächen ausgebildet sind und das dritte Bauteil dem zweiten Bauteil gegenüberliegend mindestens eine Reibfläche aufweist.

Die Reibfläche kann eine Textur aufweisen und beispielsweise genutet oder geschlitzt sein. Hierbei können die Strukturen auf der Reibfläche sich radial erstrecken oder auch kreisförmig umlaufen. Die Reibfläche kann hierbei am dritten Bauteil oder am zweiten Bauteil vorgesehen sein. Je nach Anwendungsfall kann auch auf beiden Seiten eine Reibfläche von Vorteil sein.

Bei einem Ausführungsbeispiel ist vorgesehen, dass das dritte Bauteil dem ersten Bauteil zugewandt mindesten eine Rampe aufweist und das erste Bauteil dem dritten Bauteil zugewandt mindestens eine Rampe aufweist. Diese Rampen führen zu einem verspannen der Bauteile relativ zueinander und erhöhen die Reibung zwischen dem dritten Bauteil und dem zweiten Bauteil.

Diese Rampen können beliebig ausgestaltet sein, um unterschiedliche Reibwerte zu bewirken. Hierbei ist vor allem das dynamische Verhaltene der Reibeinrichtung zu berücksichtigen. Die Rampen können daher als schiefe Ebenen oder auch als Bogenfläche ausgebildet sein, um bei einem Verspannen spätestens nach einem Freiwinkel eine kontinuierliche definierte Reibungserhöhung zu erzielen.

Die Rampen können auf einem Blech befestigt sein oder einstückig mit einem umlaufenden Blech ausgebildet sein. Hierbei sind die Keile vorzugsweise aus Kunststoff oder Metall. Sie können gegossen, gespritzt oder gesintert sein. Eine einfache Herstellung der Rampen wird dadurch erzielt, dass die Rampen in ein Blech geprägt oder gezogen sind.

Vorteilhaft ist hierbei, wenn ein Freiwinkel vorgesehen ist. Dies wird beispielsweise dadurch erzielt, dass das dritte Bauteil mit einem Spiel relativ zum ersten Bauteil beweglich ist. Dieses Spiel ermöglicht auf einem bestimmten Bereich der Verdrehung von erstem zu zweitem Bauteil relativ zueinander eine Verdrehung mit minimaler Reibbelastung und die daran anschließende Rampe erhöht den Reibbeiwert bei einer weiteren Verdrehung entsprechend der Steigung der Rampe.

Ein vorteilhafter Aufbau der Dämpfungseinrichtung sieht vor, dass das erste Bauteil einen Flansch aufweist, der mit einem Federsystem in Wirkverbindung steht. Hierbei erstreckt sich ein erster Flansch vorzugsweise von den Reibflächen der Dämpfungseinrichtung radial nach Innen und ist dort mit einem wieder radial nach Außen führenden Flansch verbunden, der an die Federn anschlägt.

Auch das zweite Bauteil weist vorzugsweise einen Flansch auf, der mit einem Federsystem in Verbindung steht. Dieser Flansch kann auch als Doppelflansch ausgebildet sein, zwischen dem sich der mit dem ersten Bauteil in Wirkverbindung stehende Flansch erstreckt.

Eine derartige Anordnung ermöglicht es auch, neben einem mit den Federn in Wirkverbindung stehenden Flansch einen Flieger anzuordnen der ebenfalls mit dem Federsystem in Wirkverbindung steht. Die Dämpfungseinrichtung muss jedoch keine Flieger aufweisen. Sie kann beispielsweise auch als gedämpfte Reibscheibe ausgebildet sein, bei der die primäre und die sekundäre Seite direkt mit Federn verbunden sind.

Während das erste und das zweite Bauteil dazu dienen, eine Kraft von der Primärseite über das Federsystem auf eine Sekundärseite zu übertragen, dient der Flieger dazu, die Federn des Federsystems radial nach Innen zu halten, damit sie durch die wirkenden Zentrifugalkräfte nicht zu weit radial nach Außen gezogen werden.

Eine Ausführungsvariante sieht vor, dass das erste Bauteil einen mit den Federn in Wirkverbindung stehenden Flansch und ein tellerförmiges Teil aufweist. Dieses tellerförmige Teil kann zur Erhöhung der Primärmasse dienen und ist je nach benötigter Masse so ausgebildet, dass die jeweils benötigte Primärmasse erreicht wird. Vorteilhaft ist es, wenn dieses tellerförmige Teil einen Anlasserzahnkranz aufweist.

Um einen einfachen Aufbau der Dämpfungseinrichtung zu gewährleisten wird vorgeschlagen, dass ein mit den Federn in Wirkverbindung stehender Flansch und das tellerförmige Teil lösbar miteinander in Verbindung stehen. Diese lösbare Verbindung wird vorzugsweise über eine Verzahnung wie beispielsweise einer Splineverzahnung erreicht.

Insbesondere wenn die Dämpfungseinrichtung mit einem Schmiermittel versehen ist, wird vorgeschlagen, dass zwischen einem mit den Federn in Wirkverbindung stehenden Flansch und dem tellerförmigen Teil ein Dichtelement angeordnet ist. Dieses Dichtelement kann sich scheibenförmig um den zentralen Teil der Dämpfungseinrichtung herum erstrecken und ein Eindringen von Schmiermitteln von der Seite der Federn auf die gegenüberliegende Seite des Dichtelements verhindern.

Insbesondere hierzu wird vorgeschlagen, dass das Dichtelement ein Dichtblech und mindestens eine Dichtlippe aufweist. Die Dichtlippe kann beispielsweise mit einem sich axial erstreckenden Flansch zusammenwirken.

Der beschriebene Aufbau der Dämpfungseinrichtung erlaubt es, die Reibeinrichtung radial in der Höhe eines Federsystems oder außerhalb eines Federsystems anzuordnen. Dies ermöglicht es, im Bereich der Federn vorliegendes Schmiermittel auch für die Reibeinrichtung zu verwenden. Wenn genügend axialer Bauraum vorhanden ist, ist auch ein Anordnung innerhalb des Federsystems möglich.

Auch eine axiale Anordnung neben den Federn ist möglich, und es wird daher vorgeschlagen, dass die Reibeinrichtung axial auf der dem mit dem Antrieb verbindbaren Bauteil gegenüberliegenden Seite eines Federsystems angeordnet ist.

In den Figuren sind zwei Ausführungsbeispiele einer Dämpfungseinrichtung beschrieben, die im Folgenden näher erläutert werden. Hierbei ist zu beachten, dass die Primärseite und die Sekundärseite miteinander vertauscht werden können, ohne den Erfindungsgedanken zu verlassen. Das heißt, die Primärseite kann außen alles umgreifend angeordnet sein und die Sekundärseite radial weiter Innen oder die Sekundärseite bildet den außen umlaufenden Ring während die Primärseite Innen angeordnet ist.

Es zeigt
- Figur 1: eine teilweise geschnittene Ansicht einer Dämpfungseinrichtung, die eine Reibeinrichtung mit einseitig an der Primärseite angeordnetem Keilsystem aufweist,
- Figur 2: das Zusammenwirken von Reibflächen der in Figur 1 gezeigten Reibeinrichtung als Abwicklung in verschiedenen Positionen,
- Figur 3: eine teilweise geschnittene Ansicht einer Dämpfungseinrichtung, die eine Reibeinrichtung mit beidseitig von der Primärseite angeordneten Keilsystemen aufweist,

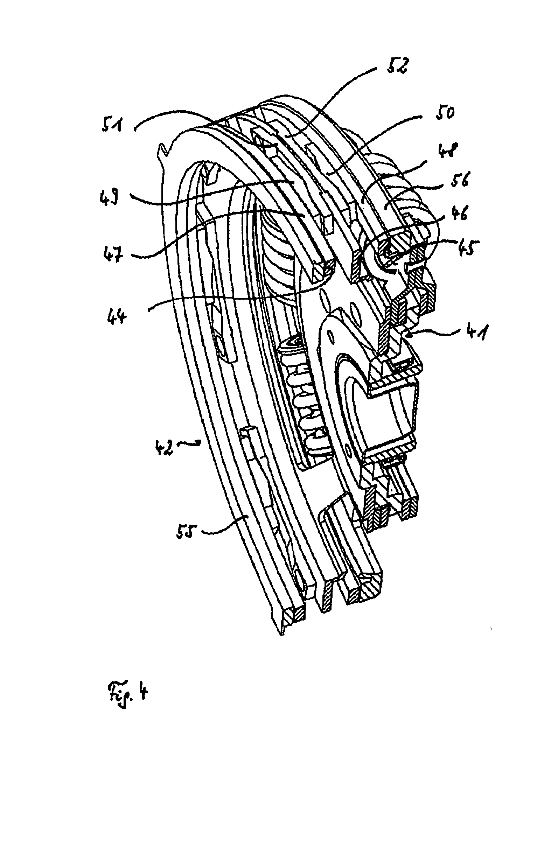

- Figur 4: eine Draufsicht auf die herausgeschnittene Reibeinrichtung aus Figur 3 und
- Figur 5: das Zusammenwirken von Reibflächen der in Figur 3 gezeigten Reibeinrichtung als Abwicklung in verschiedenen Positionen.

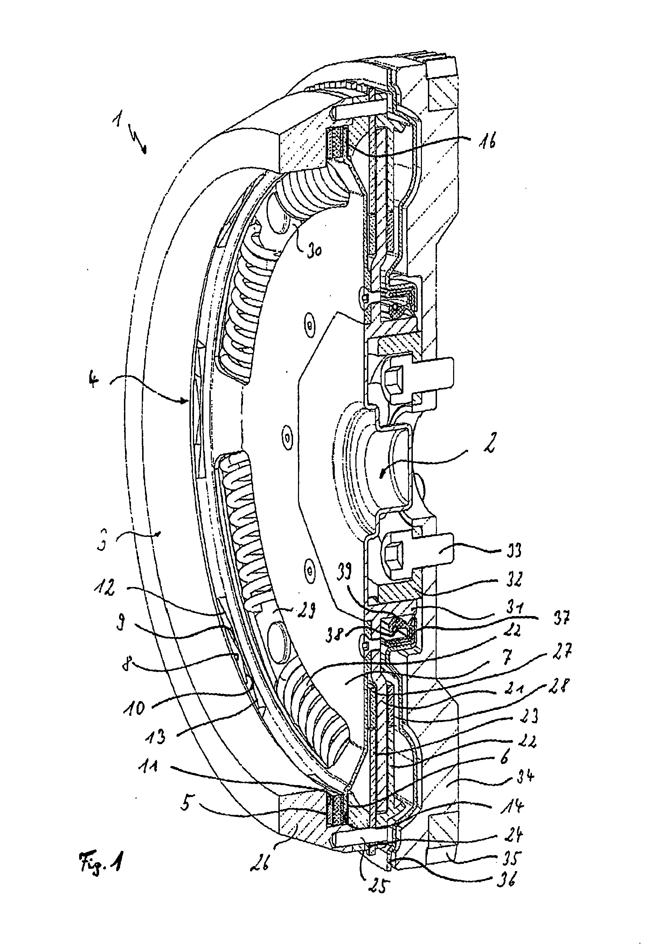

Die in Figur 1 gezeigte Dämpfungseinrichtung 1 besteht im Wesentlichen aus dem ersten Bauteil 2, das als Primärseite mit der Kurbelwelle eines Motors verbindbar ist, und dem zweiten Bauteil 3, das als Sekundärseite mit einer Kupplung und einem Getriebe verbindbar ist. Zwischen erstem Bauteil 2 und zweiten Bauteil 3 ist eine Reibeinrichtung 4 vorgesehen.

Das zweite Bauteil 3 weist zwei beabstandete Flächen 5 und 6 auf und ein Flansch 7 des ersten Bauteils 2 ragt in den Raum zwischen diesen beabstandeten Flächen 5 und 6 hinein. In dem Raum zwischen den beabstandeten Flächen 5 und 6 des zweiten Bauteils 3 ist ein drittes Bauteil 8 angeordnet, das auf seiner dem ersten Bauteil gegenüberliegenden Seite schräge Flächen 9 und 10 und auf seiner dem zweiten Bauteil gegenüberliegenden Seite eine Reibfläche 11 aufweist.

Die schrägen Flächen 9 und 10 sind zwischen zwei am Flansch 7 des ersten Bauteils 2 befestigten Rampen 12 und 13 angeordnet, sodass bei einer Relativbewegung zwischen den Bauteilen 2 und 3 die schräge Fläche 9 mit der Rampe 12 oder die schräge Fläche 10 mit der Rampe 13 zusammenwirkt. Die schrägen Flächen 9 und 10 sind derart beabstandet zu den korrespondierenden Rampen 12 und 13 angeordnet, dass erst nach einer Bewegung im Rahmen eines Freiwinkels die schrägen Flächen 9, 10 an den Rampen 12, 13 zum Anliegen kommen. Bei einer Verdrehung über das Maß des Freiwinkels hinaus wirken die schrägen Flächen derart mit den Rampen zusammen, dass der Reibbelag 11 des dritten Bauteils 8 an der Seite 5 des zweiten Teils 3 reibt, wobei entsprechend dem Winkel der Rampen 12, 13 und der schrägen Flächen 9, 10 je nach Grad der Verdrehung von erstem und drittem Bauteil relativ zueinander die Reibung an der Reibfläche 11 zu- oder abnimmt.

Durch das Verspannen vom erstem und drittem Bauteil relativ zueinender wird jedoch nicht nur das dritte Bauteil 8 über die Reibfläche 11 an die Seite 5 des zweiten Bauteils 3 gepresst, sondern das radial außenliegende Ende des Flansches 7 des ersten Bauteils 2 wird auch gegen die Seite 6 des zweiten Bauteils 3 gepresst. Um in diesem Bereich die Reibung zu erhöhen ist auch am radial außenliegenden Ende des Flansches 7 eine Reibfläche 14 vorgesehen, die mit der Seite 6 des zweiten Bauteils 3 zusammenwirkt.

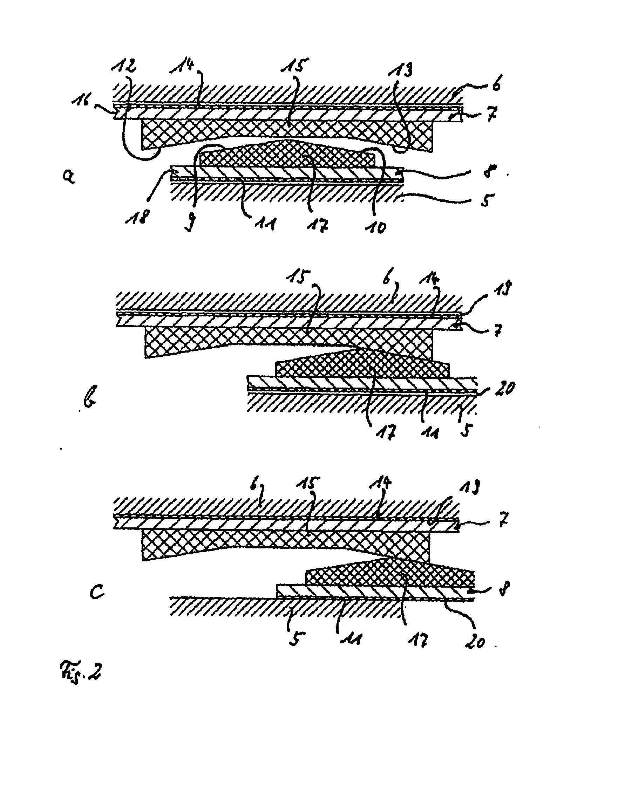

Das Zusammenwirken vom erstem, zweitem und drittem Bauteil ist in Figur 2 nochmals verdeutlicht. Figur 2a zeigt eine Grundstellung, bei der der Flansch 7 des ersten Bauteils 2 und das dritte Bauteil 8 frei beweglich zwischen den zwei Seiten 5 und 6 des zweiten Bauteils 3 liegen. Sowohl die am Flansch 7 des ersten Bauteils 2 vorgesehene Reibfläche 14 als auch die am dritten Bauteil 8 vorgesehene Reibfläche 11 liegen geringfügig beabstandet zu den Flächen 5 und 6 des zweiten Bauteils 3 und auch die schrägen Flächen 9 und 10 am dritten Bauteil 8 liegen beabstandet zu den Rampen 12 und 13 des Flansches 7 des ersten Bauteils 2.

Im Ausführungsbeispiel der Figur 1 ist ein Primärkeil 15 mit den Rampen 12 und 13 am radial äußeren Ende 16 des Flansches 7 des Primärteils 2 befestigt. Am dritten Bauteil 8 ist ein tertiärer Keil 17 an einer ringförmigen Scheibe 18 befestigt.

Die Keile 15 und 17 können jedoch auch direkt in das Ende 16 des Flansches 7 oder in die ringförmige Scheibe 18 des dritten Teiles 8 beispielsweise durch eine Verformung eingearbeitet sein.

Ein Vergleich der Figuren 2a und 2b zeigt, dass sich der Tertiärkeil 17 innerhalb eines Freiwinkels relativ zum Primärkeil 15 bewegen kann, ohne dass die Spalte 19 zwischen der Reibfläche 14 am Flansch 7 des ersten Teils 2 und der Seite 6 des zweiten Teils 3 verkleinert wird. Außerdem wird bei einer Bewegung innerhalb des Freiwinkels auch der Spalt 20 zwischen der Reibfläche 11 und der Seite 5 des zweiten Teils 3 nicht verkleinert. Dies geschieht zum Beispiel im Leerlauf oder im Betrieb mit konstanter Last. Hierbei wird nur das Federsystem beansprucht und an der Reibeinrichtung nahezu keine Reibung erzeugt. Dieser Freiwinkel liegt in der Regel zwischen ± 3 und ± 7 Grad und ist beispielweise bei einem Dieselmotor etwa ± 6 Grad.

Ein Vergleich der Figuren 2b und 2c zeigt, dass nach einer Anlage des tertiären Keils 17 am Primärenkeil 15 bei einer weiteren Relativbewegung des Flansches 7 des ersten Teils 2 zum dritten Bauteil 8 die Reibflächen 11 und 14 gegen die Seiten 5 und 6 des zweiten Teils 3 gepresst werden. Die Keile 15 und 17 gleiten aufeinander auf und die Spalte 19 und 20 werden zu Null. Der primärseitige Keil 15 nimmt den Tertiärkeil 17 mit und auf Grund der entstehenden Axialkraft gibt sich ein der Relativverdrehung der Keile zueinander entgegenwirkendes Drehmoment. Dies ist dann der Dämpfer beziehungsweise die Reibeinrichtung 4.

Das erste Bauteil 2, das über den Flansch 7 und die Reibeinrichtung 4 mit dem sekundärseitigen zweiten Bauteil 3 in Verbindung steht, hat einen weiteren Flansch 21, der mit Federn 22 als primärseitige Federanlage zusammenwirkt. Als sekundärseitige Federanlage wirken die beiden sich von radial außen nach innen erstreckenden Flansche 22 und 23. Der Flansch 22 ist über den Flansch 23 mit einem ringförmigen Bauteil 24 verbunden, das auch die Anlage 6 bildet, und der Flansch 23 ist über einen Bolzen 25 an diesem Bauteil 24 befestigt. Der Bolzen 25 verbindet darüber hinaus die Flansche 22 und 23 mit einem weiteren ringförmigen Bauteil 26, das die Anlage 5 bildet und das mit einer Kuppelung oder einem Getriebe verbindbar ist.

Radial innerhalb der Flansche 22 und 23 ist beidseitig des Flansches 21 jeweils ein Flieger 27 beziehungsweise 28 angeordnet, der als ringförmiges Bauteil ausgebildet ist und sich radial erstreckende Enden 29, 30 aufweist, die die Federn 22 halten und einer auf die Federn wirkenden Zentrifugalkraft entgegenwirken.

Der Flansch 21 des ersten Bauteils 2 hat eine axiale Erstreckung 31, die über eine Splineverzahnung mit einem Winkelblech 32 zusammenwirkt. Das Winkelblech 32 ist über eine Schraube 33 mit einem tellerförmigen Blech- oder Gussteil 34 verbunden. Dieses tellerförmige Teil 34 zählt somit zur Primärmasse und es kann je nach Anforderungen an die benötigte Masse aus unterschiedlichem Material und in unterschiedlichen Abmessungen ausgebildet sein. Im vorliegenden Ausführungsbeispiel ist darüber hinaus am radial äußeren Ende des tellerförmigen Teils 34 ein Anlasserzahnkranz 35 vorgesehen.

Zwischen dem tellerförmigen Teil 34 und dem ebenfalls primärseitigen Flansch 22 ist ein scheibenförmiges Dichtblech 36 angeordnet, das sich etwa vom sich axial erstreckenden Flansch 31 bis zum radial äußersten Ende der Dämpfungseinrichtung 1 erstreckt. Am radial inneren Ende des Dichtblechs 36 ist eine mit einer L-förmigen Verstärkung 37 und einem Spannring 38 versehene Dichtlippe 39 angeordnet, die am sich axial erstreckenden Flansch 31 anliegt. Es ist auch eine L-förmige Dichtung - beispielsweise als PTFE-Dichtlippe - denkbar, die auch direkt an das Dichtblech 36 angespritzt werden kann.

Das Dichtblech 36 kann an seinem radial äußeren Ende mit einem Gehäuse (nicht gezeigt) verbunden sein oder verbunden werden. Dadurch entsteht ein schmiermittelbeaufschlagter Bereich in der Zeichnung auf der linken Seite des Dichtblechs 36, in dem die Federn und die Reibeinrichtung angeordnet sind. Dieser Raum wird durch das Dichtblech 36 abgedichtet, sodass kein Schmiermittel zum tellerförmigen Teil 34 gelangen kann.

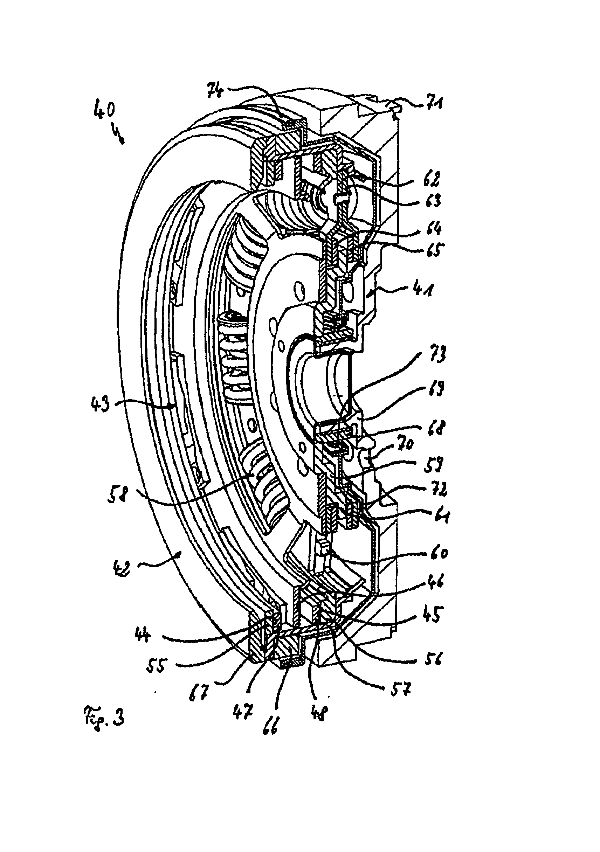

Die in Figur 3 gezeigte Dämpfungseinrichtung 40 hat ein erstes primärseitiges, dass heißt mit der Kurbelwelle eines Motors verbindbares Bauteil 41, ein zweites sekundärseitiges mit einer Kupplung oder einem Getriebe verbindbares Bauteil 42 und eine dazwischen angeordnete Reibeinrichtung 43.

Die Reibeinrichtung 43 ist im Gegensatz zu dem in Figur 1 gezeigten Ausführungsbeispiel zweiflutig ausgebildet. Hierzu besteht die Reibeinrichtung aus spiegelbildlich ausgebildeten Teilen, die von zwei gegenüber liegenden Seiten mit dem ersten Bauteil 41 zusammen wirken. Hierzu weist das zweite Bauteil 42 zwei beabstandete Flächen 44 und 45 auf, zwischen denen ein Ende 46 des ersten Bauteils 41 angeordnet ist.

Darüber hinaus sind zwischen diesen Flächen 44 und 45 zwei spiegelbildlich aufgebaute dritte Bauteile 47 und 48 angeordnet, auf denen jeweils ein Tertiärkeil 49 bzw. 50 befestigt ist. Die Tertiärteile 49, 50 wirken mit am Ende 46 des Primären Bauteils 41 befestigten Prämierkeilen 51 und 52 zusammen, sodass bei einer Relativbewegung zwischen dem Primärbauteil 41 und den Teilen 47 und 48 des dritten Bauteils sich das erste Bauteil 41 und das dritte Bauteil 47, 48 derart verspannen, dass die seitlichen Flächen der Bauteile 47 und 48 gegen die Flächen 44 und 45 des Sekundären Bauteils 42 gepresst werden.

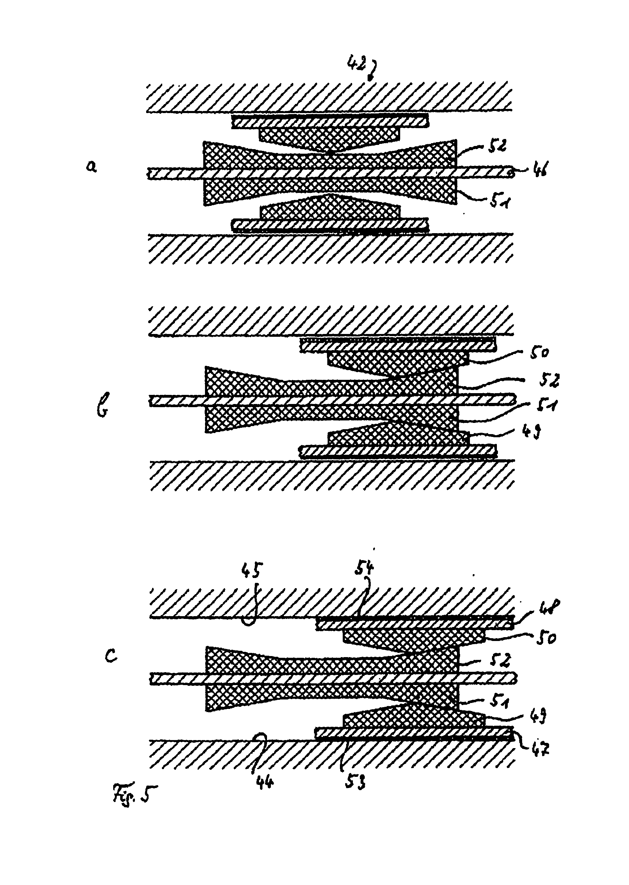

Dieser Vorgang ist in Figur 5 nochmals genauer erläutert. Figur 5a zeigt wie das Ende 46 des primären Bauteils 41 mit den Primärkeilen 51 und 52 im Rahmen einer Bewegung über einen bestimmten Freiwinkel relativ zum sekundären zweiten Bauteil 42 frei beweglich ist bis die primären Rampen 51 und 52 an den tertiären Rampen 49 und 50 anliegen. Bei einer weiteren Bewegung der Keile relativ zueinander werden die Keile 49 und 50 gegen die Anlageflächen 44 und 45 gedrückt. Dabei legen sich an den Teilen 47 und 48 angebrachte Reibflächen 53 und 54 gegen die Seiten 44 und 45, wodurch eine Reibung zwischen dem primärseitigen ersten Bauteil 41 und dem sekundärseitigen zweiten Bauteil 42 entsteht.

Die beiden Flächen 44 und 45, die als Anlage für die Reibflächen 53 und 54 dienen, sind an ringförmigen Bauteilen 55 und 56 vorgesehen. Diese ringförmigen Bauteile 55 und 56 sind wiederum an einem sich im wesentlichen in axialer Richtung erstreckenden ringförmigen Trägerbauteil 57 angeordnet. Das Trägerbauteil 57 bildet zusammen mit dem ringförmigen Bauteil 56 die sekundärseitige Anlagefläche für die Federn 58 und ein mit dem flanschartigen Bauteil 46 verbundenes topfartiges Bauteil 59 weist radiale Erstreckungen 60 auf, die als primärseitige Anlagefläche für die Federn 58 dienen.

Das topfartige Bauteil 59 hat zwischen den radialen Erstreckungen 60 eine kürzere radiale Erstreckung 61 und beidseitig dieser radialen Erstreckung sind an ihren radial äußeren Enden miteinander vernietete Fliegerbleche 62 und 63 bzw. 64 und 65 frei beweglich angeordnet. Die miteinander verbundenen Fingerbleche können auch verschraubt, verschweißt oder vertoxt sein. Diese Fliegerbleche halten mit radialen Erstreckungen die Federn 58 und wirken einer auf die Federn 58 wirkenden Zentrifugalkraft entgegen.

Ein umlaufender Ring 66 hält das Blech 57 und wirkt als zusätzliche Masse ebenso wie der umlaufende Ring 67, der ebenfalls am Trägerblech 57 befestigt ist und auch als Klemmring zum Anschluss an die Kupplung dienen kann.

Das topfartige Bauteil 59 ist radial innen mit einem ringförmigen Bauteil 68 verbunden, das eine Verzahnung aufweist, über die es mit einem tellerförmigen Bauteil 69 verbunden ist. Dieses tellerförmige Bauteil 69 weist Bohrungen 70 auf, über die das gesamte erste Bauteil 41 an einer Kurbelwelle (nicht gezeigt) befestigbar ist. Darüber hinaus weist das tellerförmige Bauteil 70 eine radiale Erstreckung auf, die als Zusatzmasse ausgebildet ist und eine Triggerverzahnung 71 zur Drehzahlmessung und einen Absatz zur Aufnahme eines Zahnkranzes (nicht gezeigt) aufweist.

Zwischen dem tellerförmigen Bauteil 69 und den Federn 58 sowie der Reibeinrichtung 43 ist ein Dichtblech 72 angeordnet, das an seiner radial inneren Seite eine Dichtlippe 73 aufweist. Diese Dichtlippe 73 dichtet gegen das sich axial erstreckende primärseitige Bauteil 68 ab, und es weist an seinem radial außen liegenden Ende eine ringförmige Dichtung 74 auf, die mit einer Gehäusewandlung (nicht gezeigt) zusammen wirkt. Das Dichtblech 72 begrenzt somit einen mit Schmiermittel beaufschlagten Bereich der Federn 58 und der Reibeinrichtung 43 ab und verhindert ein austreten des Schmiermittels in Richtung zum tellerförmigen Bauteil 69.

## Patentansprüche

1. Dämpfungseinrichtung (1), insbesondere für ein Zweimassenschwungrad, mit einem ersten Bauteil (2) und einem zweiten Bauteil (3) und einer dazwischen angeordneten Reibeinrichtung, **dadurch gezeichnet, dass** das erste Bauteil (2) und/oder das zweite Bauteil (3) einen Flansch aufweist, der mit einem Federsystem in Wirkverbindung steht, und dass neben einem mit dem Federsystem in Wirkverbindung stehenden Flansch ein Flieger (27, 28) angeordnet ist, der ebenfalls mit dem Federsystem in Wirkverbindung steht. *[ursprünglich eingereicht (WO); Ansprüche 17, 18 und 19; ursprüngliche Beschreibung Absätze 19, 20 und 21]*

2. Dämpfungseinrichtung (1) nach Anspruch 1, **dadurch gekennzeichnet, dass** die Dämpfungseinrichtung (1) den Flieger (27, 28) aufweist. *[neu eingereicht; ursprüngliche Beschreibung Absatz 21]*

3. Dämpfungseinrichtung (1) nach Anspruch 1 oder 2, **dadurch gekennzeichnet, dass** die Dämpfungseinrichtung (1) als gedämpfte Reibscheibe ausgebildet ist. *[neu eingereicht; ursprüngliche Beschreibung Absatz 21]*

4. Dämpfungseinrichtung (1) nach Anspruch 3, **dadurch gekennzeichnet, dass** die primäre und die sekundäre Seite der Reibscheibe direkt mit den Federn verbunden ist. *[neu eingereicht; ursprüngliche Beschreibung Absatz 21* J

5. Dämpfungseinrichtung (1) nach den Ansprüchen 1 bis 4, **dadurch gekennzeichnet, dass** die Flächen des zweiten Bauteils (3) parallele, ebene Flächen sind. *[neu eingereicht; ursprüngliche Beschreibung Absatz 11]*

6. Dämpfungseinrichtung (1) nach den Ansprüchen 1 bis 5, **dadurch gekennzeichnet, dass** die Reibfläche eine Textur aufweist. *[neu eingereicht; ursprüngliche Beschreibung Absatz 14]*

7. Dämpfungseinrichtung (1) nach den Ansprüchen 1 bis 6, **dadurch gekennzeichnet, dass** die Reibfläche genutet oder geschlitzt ist. *[neu eingereicht; ursprüngliche Beschreibung Absatz 14]*

8. Dämpfungseinrichtung (1) nach den Ansprüchen 1 bis 7, **dadurch gekennzeichnet, dass** das erste Bauteil (2) mit einem Antrieb verbindbar ist und das zweite Bauteil (3) mit einem Abtrieb. *[ursprünglich eingereicht (WO); Anspruch 2; ursprüngliche Beschreihung Absatz 06]*

9. Dämpfungseinrichtung (1) nach den Ansprüchen 1 bis 8, **dadurch gekennzeichnet, dass** das erste Bauteil (2) mit einem Abtrieb verbindbar ist und das zweite Bauteil (3) mit einem Antrieb. *[ursprünglich eingereicht (WO); Anspruch 3; ursprüngliche Beschreibung Absatz 06]*
